# EUROPÄISCHE PATENTSCHRIFT

(11) **EP 3 300 522 B1**
(45) Veröffentlichungstag und Bekanntmachung des Hinweises auf die Patenterteilung: **26.06.2019**
(21) Anmeldenummer: 16724874.9
(22) Anmeldetag: 19.05.2016
(51) Int. Cl.: G06F 21/60, G06F 21/45, G06F 21/46, G06F 21/31

(54) **BEREITSTELLUNG ZUMINDEST EINES PASSWORTS**
PROVISION OF AT LEAST ONE PASSWORD
FOURNITURE D'AU MOINS UN MOT DE PASSE

(30) Priorität: 22.06.2015 DE 102015211475
(43) Veröffentlichungstag der Anmeldung: 04.04.2018
(73) Patentinhaber: Siemens Aktiengesellschaft, 80333 München (DE)
(72) Erfinder: LUKAS, Klaus, 81739 München (DE); SOMMER, Elmar, 80337 München (DE)
(86) Internationale Anmeldenummer: PCT/EP2016/061263
(87) Internationale Veröffentlichungsnummer: WO 2016/206872

(56) Entgegenhaltungen:
- US-A1- 2005 193 144
- US-A1- 2010 024 028
- US-A1- 2013 326 611
- IAN TIMOTHY FISCHER ET AL: "Short paper: Smart phones - not smart enough?", PROCEEDINGS OF THE SECOND ACM WORKSHOP ON SECURITY AND PRIVACY IN SMARTPHONES AND MOBILE DEVICES, SPSM '12, 16. Oktober 2012 (2012-10-16), Seite 27, XP055271135, New York, New York, USA DOI: 10.1145/2381934.2381941 ISBN: 978-1-4503-1666-8

## Beschreibung

Die Erfindung betrifft Verfahren und Vorrichtungen zum Bereitstellen zumindest eines Passworts, um ein Gerät aus einem ersten Betriebszustand in einen zweiten Betriebszustand zu versetzen.

Eine Eingabe von Passworten erfolgt heutzutage oftmals standardmäßig zum Entsperren, auch Authentifizierung oder Login genannt, von Geräten, wie Fräsroboter, Röntgenapparate oder Smart-Meter.

Speziell in Umgebungen, in denen eine Grundsicherheit durch den physikalischen Schutz von Räumen, wie beispielsweise von industriellen Anlagen, Kraftwerken, Ärztebereichen in Krankenhäusern gegeben ist, wird oftmals auf Mehrkosten für höherwertigere Authentifizierungs-Mechanismen wie Chipkarten verzichtet. Auf der anderen Seite müssen Passworte bestimmten Mindestanforderungen entsprechen, damit bei unerkanntem Eindringen trotzdem ein Schutz vor unerlaubter Authentifizierung während dem "Login" besteht.

In der Regel basieren die Mindestanforderungen auf Kriterien wie beispielsweise - die Verwendung von Sonderzeichen, Groß- und Kleinbuchstaben oder auf der Passwortlänge. Diese kann bei einfachen Systemen 8 Zeichen, bei kritischeren Systemen durchaus auch 15 Zeichen oder mehr lang sein.

Im Verbund mit Bildschirmschonern/Bildschirm-Sperrmechanismen, welche nach kurzer Zeit einer Inaktivität, Geräte sperren, entsteht dadurch häufig die Situation, dass bereits nach einer kurzen Arbeitsunterbrechung wieder das gesamte Passwort zum Entsperren eingegeben werden muss. Dies ist aber gerade in zeitkritischer Umgebung ungünstig, wenn beispielsweise ein Operator schnell auf eine Alarmmeldung reagieren soll. Erschwert wird dies weiterhin durch Eingabesysteme ohne vollwertige Tastatur, wobei die Eingabe eines langen Passworts ein mühseliger und fehleranfälliger Vorgang ist, zum Beispiel bei einem berührungsgesteuerten Bildschirm.

In US2013/326611A1 wird ein Verfahren offenbart, dass nach kürzeren Sperrungen des Bildschirms nur einen Teil des Passworts verlangt. Dabei ist die Länge des Teilpassworts abhängig von der Dauer der Sperrung.

Ein ähnliches Verfahren wird in US2010/024028A1 beschrieben.

In US2005/193144A1 wird allgemeiner vorgeschlagen, die verlangte Passwortstärke an den situativen Kontext anzupassen.

Alternative Lösungen zum Login per Zeicheneingabe sind beispielweise teurere Hardware-basierte Lösungen wie Chipkarten-Authentifizierung mit PIN, biometrische Fingerabdrucksensoren oder berührungslose Chips, um eine schnellere Authentifizierung zu erreichen.

Bei mobilen Endgeräten wie Smartphones oder Tablets haben sich auch PIN-Eingabemöglichkeiten über Muster etabliert, die mittels Fingerwisch eingegeben werden können. Da diese Muster durch Wischrückstände auf dem Display erraten werden können, wird hierbei die Sicherheit zu Gunsten der bequemeren Authentifizierung gemindert.

Auch sprachbasierte Authentifizierungen haben sich wegen hoher Fehlerrate in kritischen Umgebungen nicht durchgesetzt.

Der Erfindung liegt somit die Aufgabe zugrunde, Verfahren und Vorrichtungen zu beschreiben, mit denen eine schnelle Authentifizierung durchführbar ist, wobei ein angemessener Kompromiss zwischen Benutzerkomfort und Sicherheit gegeben sein soll.

Diese Aufgabe wird durch die Merkmale der unabhängigen Ansprüche gelöst. Weiterbildungen der Erfindung sind den abhängigen Ansprüchen zu entnehmen.

Die Erfindung betrifft ein Verfahren zur Bereitstellung zumindest eines Passworts für eine Zustandsänderung eines Geräts von einem ersten Betriebszustand in einen zweiten Betriebszustand durch eine Eingabe des Passworts, bei dem eine Anzahl an Zeichen des Passworts in Abhängigkeit von einer Zeitdauer des ersten Betriebszustands des Geräts eingestellt wird. Insbesondere kann die Anzahl an Zeichen mit einer Zunahme der Zeitdauer größer eingestellt werden.

Dieses Verfahren zeigt den Vorteil, dass je länger das Gerät in dem ersten Betriebszustand, bspw. inaktiv, ist, desto stärker ist das Passwort, welches zur Änderung des Betriebszustands benötigt wird. Stärker bedeutet in diesem Zusammenhand, dass ein Kompromittieren des Passwortes aufwendiger ist, weil bspw. das Passwort eine große Anzahl von Stellen aufweist. Auf der anderen Seite wird bei kurzer Zeitdauer des ersten Betriebszustands ein kürzeres Passwort verwendet, wodurch in kurzer Zeit mit weniger Datenvolumen für das Passwort das Gerät den Betriebszustand wechseln kann.

In einer Ausführungsvariante des Verfahrens werden folgende Schritte durchlaufen:
a) nach einer erfolgreichen Eingabe des Passworts mit einer ersten Anzahl an Zeichen eine Liste mit zumindest einem Teilpasswort erstellt wird, wobei das zumindest eine Teilpasswort eine Teilmenge an Zeichen des Passworts aufweist und eine Anzahl an Zeichen des zumindest einen Teilpasswortes kleiner oder gleich als die erste Anzahl ist,
b) durch die Liste eine Menge an Passwörtern für die Zustandsänderung des Geräts von dem ersten Betriebszustand in den zweiten Betriebszustand bereitstellt wird.

Hierdurch kann in einfacher Art und Weise mit Hilfe einer Liste, welche die Passwörter bzw. Teilpasswörter enthält, das Verfahren realisiert werden.

Vorzugsweise werden nach Ablauf eines Zeitabschnitts der Zeitdauer, wobei der Zeitabschnitt einen Zeitraum nach Durchführung einer Änderung der Liste repräsentiert, ein oder mehrere Teilpasswörter aus der Liste entfernt werden. Hierdurch wird gewährleistet, dass nach Ablauf der Zeitabschnitts der Zeitdauer nur noch Teilpasswörter/Passwörter zur Verfügung stehen, die nach dem Ablauf des Zeitabschnitts zulässig sind, da diese eine höhere Sicherheit aufweisen, als vor Ablauf.

Ferner kann nach Entfernen zumindest eines Teilpasswortes der Zeitabschnitt bis zum nächsten Ändern der Liste erhöht oder reduziert werden. Hierdurch kann die Sicherheit der Passworte an vorgebbare Gegebenheiten angepasst werden. Beispielsweise steigt der Zeitabschnitt exponentiell mit der Länge desjenigen Teilpasswortes, welches eine kleinste Anzahl von Zeichen unter allen in der Liste enthaltenen Teilpasswörtern aufweist. In einem anderen Beispiel kann der Zeitabschnitt mit einer reduzierten Anzahl an in der Liste verbleibenden Teilpasswörtern reduziert werden, wenn bspw. bei längerer Aktivität des ersten Betriebszustandes die Sicherheit des Geräts schnell erhöht werden soll.

In einer Erweiterung hierzu wird ein Wert des Zeitabschnitts zumindest auf Basis einer Entropie desjenigen Teilpassworts der Liste erzeugt wird, welches die kleinste Anzahl an Zeichen aufweist. Hierdurch wird nicht nur die Länge des Teilpasswortes sondern auch seine Zeichenkombination berücksichtigt. Falls die Entropie des betrachteten Teilpasswortes mit der kürzesten Länge relativ hoch ist, weil eine Vorhersagbarkeit der gewählten Zeichenkette kompliziert - also aufwendig - ist, so kann dann auch der Zeitabschnitt größer gewählt werden, weil eine Wahrscheinlichkeit einer Kompromittierung des Teilpasswortes als geringer erwartet wird.

Vorzugsweise wird ein Wert für den Zeitabschnitt auf Basis einer Entfernung oder Ortsangabe, insbesondere einer geographischen Position des Geräts, eingestellt. Hierdurch können lokale Sicherheitsanforderungen bei der Bestimmung des Zeitabschnitts berücksichtigt werden. So kann in Anlagen, die bei Manipulation hohe Schäden verursachen können, ein geringerer Wert für den Zeitabschnitt gewählt werden, als in Anlagen, die bei Manipulation geringere wirtschaftliche Schäden verursachen. Dies kann durch eine Positionsbestimmung auf Basis von z.B. GPS (GPS- Global Position System) erfolgen. Ferner kann auch ein Abstand zwischen Bedienpersonal vom Gerät erfasst werden, denn je weiter das Bedienpersonal vom Gerät entfernt ist, desto unauffälliger können Angriffe auf das Gerät durch Kompromittierung des Passwortes erfolgen. In diesem Fall kann ein größerer Abstand des Bedienpersonals einen kürzeren Zeitabschnitt bedingen.

In einer Variante des Verfahrens wird ein Löschen von Teilpasswörtern aus der Liste unterbunden, sobald lediglich ein einziges Passwort in der Liste enthalten ist. Hierdurch wird vermieden, dass kein Passwort in der Liste enthalten ist und somit keine Möglichkeit zur Änderung des Betriebszustands mehr möglich ist.

Vorzugsweise wird die Liste mit mehreren Teilpasswörtern derart erstellt, dass eines der Teilpasswörter mit einer kleinen Anzahl an Zeichen vollständig in einem anderen der Teilpasswörter mit einer zu der kleinen Anzahl größeren Anzahl an Zeichen enthalten ist. Hierdurch muss der Benutzer sich lediglich ein einziges Passwort merken, da bereits bei Teileingabe des Passwortes ein Teilpasswort erkannt werden kann, falls dieses als Teilpasswort in der Liste vorhanden ist. Zudem wird hierdurch die Bildung der Teilpasswörter erheblich vereinfacht und der Benutzer muss sich keine Passwortvarianten merken. Ferner muss in diesem Fall der Benutzer, der ein Passwort eingibt, sich nicht merken, wie die Teilpasswörter, die in der Liste noch vorhanden sind, konkret aufgebaut sind. Hierdurch ergibt sich eine Vereinfachung der Vorgehensweise.

Vorzugsweise kann in einer Variante des Verfahrens das zumindest eine Teilpasswort mit Hilfe eines Hash-Kodierverfahrens kodiert in der Liste organisiert gespeichert werden. Hierdurch wird eine Möglichkeit zur Manipulation des Verfahrens erheblich reduziert, da die Teilpasswörter/Passwörter nur in verschlüsselter Form in der Liste abgelegt sind.

Die Sicherheit kann bei Einsatz von Hash-Kodierverfahren noch erhöht werden, falls bei der Kodierung des Teilpassworts ferner ein Zufallswert berücksichtigt und der Zufallswert zusätzlich in der Liste gespeichert wird. Der Zufallswert ist ein sogenannter "Salt", der bei der Erstellung der Hash-Werte verwendet wird und verhindert, dass vorberechnete Hashwerte zur Passwort-Cracken benutzt werden können.

Ferner umfasst die Erfindung eine Vorrichtung zur Bereitstellung zumindest eines Passworts für eine Zustandsänderung eines Geräts von einem ersten Betriebszustand in einen zweiten Betriebszustand mittels einer Eingabe des Passworts, bei der eine erste Einheit zum Einstellen einer Anzahl an Zeichen des Passworts in Abhängigkeit von einer Zeitdauer des ersten Betriebszustands des Geräts ausgestaltet ist.

Die Vorteile der Vorrichtung sind analog zu denen des Verfahrens.

Ferner kann die Vorrichtung eine zweite Einheit aufweisen, die derart ausgestaltet ist, dass zumindest einer der vorstehenden Verfahrensschritte implementier- und ausführbar ist.

Die Vorteile der Vorrichtung sind analog zu denen des Verfahrens.

Die Erfindung und ihre Weiterbildungen werden anhand der folgenden Figuren näher erläutert. Im Einzelnen zeigen:
- Figur 1: erstes Ausführungsbeispiel
- Figur 2: Ablaufdiagramme des ersten Ausführungsbeispiels
- Figur 3: Vorrichtung zur Realisierung der Erfindung

In den Figuren sind Elemente mit gleicher Funktion und Wirkung mit denselben Bezugszeichen versehen.

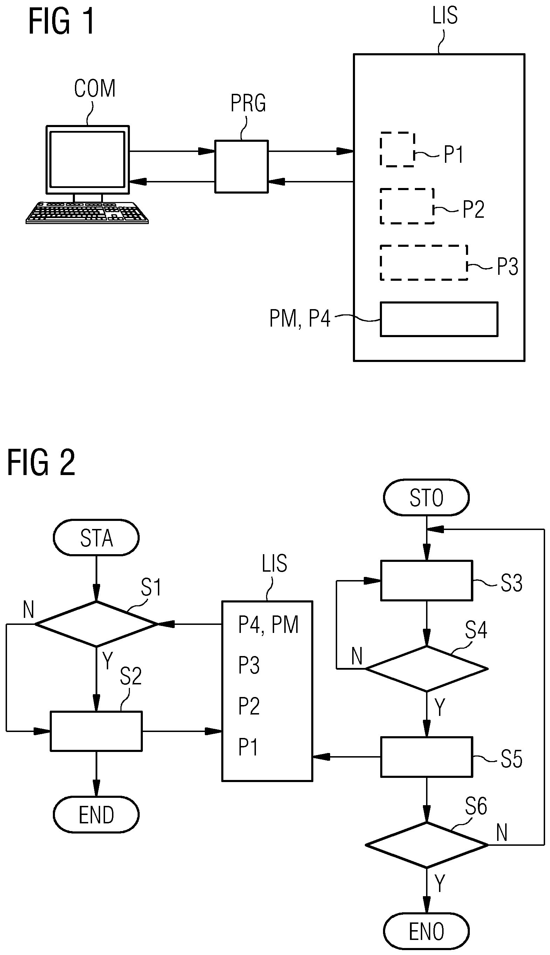

In einem ersten Ausführungsbeispiel, siehe Figur 1, wird die Erfindung anhand eines Geräts in Form eines Arbeitsplatzrechners COM aufgezeigt. Ein Benutzer arbeitet mit dem Arbeitsplatzrechner. Dazu muss er sich zunächst an dem Arbeitsplatzrechner einloggen bzw. authentifizieren. Dazu gibt er sein Passwort PM=P4="a!8m" ein (die Anführungszeichen gehören nicht zum Passwort werden aber in dieser Beschreibung zur besseren Lesbarkeit von Passwörtern angegeben). Das Passwort umfasst eine Aneinanderreihung von Zeichen, wie Zahlen, Buchstaben und Sonderzeichen. Die Eingabe, Prüfung und die weitere Bereitstellung des Passworts zur Authentifizierung wird von einem Programm PRG gesteuert, das beispielsweise auf dem Arbeitsplatzrechner installiert ist und dort ausgeführt wird.

Nach Eingabe des Passwortes prüft das Programm, ob es sich um ein gültiges Passwort handelt oder nicht. Dazu sucht es das Passwort in einer Liste LIS, die in einem Speicher abgelegt ist. Falls das Passwort in der Liste gefunden wird, ändert das Programm den Zustand des Arbeitsplatzrechners von einem ersten Betriebszustand in einen zweiten Betriebszustand, so dass der Benutzer dann eigene Programme starten kann. Der erste Betriebszustand sperrt den Zugriff auf die Betriebsoberfläche des Arbeitsplatzrechners, so dass in diesem Fall nur das Passwort eingegeben werden kann. In dem zweiten Betriebszustand wird dem Benutzer die Betriebsoberfläche zum Bedienen zur Verfügung gestellt. Im Folgenden wird der erste Betriebszustand auch als inaktiver Zustand und der zweite Betriebszustand als aktiver Zustand bezeichnet. Falls das Passwort in der Liste nicht gefunden wird, gibt das Programm den Bildschirm für den Benutzer nicht frei, d.h. der Arbeitsplatzrechner verharrt in seinem inaktiven Zustand.

Figur 2 zeigt Schritte zum Ausführen der Erfindung gemäß dem ersten Ausführungsbeispiel. Im Zentrum steht die Liste LIS, welche ein oder mehrere Passwörter enthält, mit denen der Arbeitsplatzrechner in den aktiven Zustand versetzt werden kann. Zunächst weißt die Liste lediglich das Passwort in seiner vollen Länge auf. Dieses wird auch Master-Passwort genannt, da Teilpassworte später davon abgeleitet werden. Im vorliegenden Beispiel weißt das Master-Passwort P4, PM vier Zeichen auf PM="a!8m".

Figur 2 zeigt auf der linken Seite ein erstes Flussdiagramm, das im Startzustand STA startet und dann den ersten Zustand S1 erreicht. In dem ersten Zustand S1 wird geprüft, ob eine Eingabe eines eingegebenen Passworts gleich einem zulässigen Passwort stattgefunden hat oder nicht. Die Überprüfung findet derart statt, dass das eingegebene Passwort einem der in der Liste abgelegten Passwörter, d.h. dem zulässigem Passwort, entspricht. Falls kein zulässiges Passwort gefunden wird, geht das Flussdiagramm über einen Pfad N zum Endzustand END des Flussdiagramms. Falls das eingegebene Passwort einem der Passwörter der Liste gleicht, wird über den Pfad Y ein zweiter Zustand S2 erreicht, der Teilpassworte P1, P2, P3 mit unterschiedlichen Längen, d.h. mit einer jeweils unterschiedlichen Anzahl an Zeichen, erzeugt. Der zweite Zustand S2 schreibt in die Liste LIS folgende Teilpassworte:

| Teilpasswort | Inhalt | Anzahl an Zeichen |
|---|---|---|
| P1 | a | 1 |
| P2 | a! | 2 |
| P3 | a!8 | 3 |

Jedes Teilpasswort umfasst jeweils einen Teil des MasterPassworts, wobei jedoch die jeweilige Anzahl an Zeichen von 1 Zeichen bis 3 Zeichen beträgt, das heißt kleiner oder gleich einer Anzahl an Zeichen des Masterpasswortes.

Nach Bereitstellen der Teilpasswörter endet das Ablaufdiagramm im Endzustand END.

Um einen unberechtigten Zugriff auf den Arbeitsplatzrechner zu vermeiden, ändert der Arbeitsplatzrechner seinen Zustand von dem aktiven Zustand in den inaktiven Zustand nach einer Zeitspanne von bspw. 1 Minute, falls innerhalb dieser Zeitspanne keine Benutzereingabe erfolgt. Der Arbeitsplatzrechner schaltet dann beispielsweise den Bildschirmschoner ein, sodass lediglich ein Passwort im Rahmen des Logins, jedoch keine weiteren Eingaben am Arbeitsplatzrechner, erfolgen kann.

Nach dem Übergang vom aktiven Zustand in den inaktiven Zustand startet das Ablaufdiagramm auf der rechten Seite von Figur 2 mit dem Startzustand STO. Dieser Zustand geht sogleich in den dritten Zustand S3 über, in dem ein Zeitabschnitt TP für die Zeitdauer TD definiert wird. Der Zeitabschnitt TO definiert einen Zeitraum, nach dem die Liste mit den Passwörtern bzw. Teilpasswörtern um ein oder mehrere Teilpasswörter reduziert wird. Die Zeitdauer TD beschreibt den Zeitraum, in dem der erste Betriebszustand aktiv ist. Während der Zeitdauer wird in einigen Zeitabständen, als Zeitabschnitte TP bezeichnet, eine Liste mit möglichen Passwörtern verändert, um nach und nach die Sicherheit durch eine Erhöhung einer Länge des jeweils zugelassenen Passwortes zu erhöhen. Der Zeitabschnitt TP beträgt beispielsweise 5 Minuten. Bis zum Ablauf dieser Zeitabschnitts kann der Benutzer anstelle des Masterpassworts auch eines der Teilpasswörter, z.B. P1="a", nutzen, um schnell und einfach den Arbeitsplatzrechner in den aktiven Zustand zu versetzen.

Nach der Definition des Zeitabschnitts TP geht das Zustandsdiagramm von dem dritten Zustand S3 in den vierten Zustand S4 über. Solange der Zeitabschnitt von 5 Minuten noch nicht abgelaufen ist wird über den Pfad N der vierte Zustand S4 immer wieder aufgerufen. Nach Ablauf des Zeitabschnitts von 5 Minuten geht das Zustandsdiagramm über den Pfad Y in den fünften Zustand S5 über. Dort werden eines oder mehrere Teilpasswörter aus der Liste gelöscht, wobei dasjenige Teilpasswort gelöscht wird, das eine geringste Anzahl an Zeichen der noch in der Liste vorhandenen Teilpasswörter aufweist. Somit löscht der fünfte Zustand S5 das Teilpasswort P1.

Das Zustandsdiagramm setzt nach dem Löschen in dem sechsten Zustand S6 fort. Dort wird geprüft, ob außer dem Master-Passwort noch weitere, verkürzte, Passwörter, das heißt Teilpasswörter, in der Liste LIS vorhanden sind. Falls dies zutrifft, wird das rechte Zustandsdiagramm über den Pfad Y in dem dritten Zustand S3 fortgesetzt, ansonsten wird der Ablauf in einem Endzustand ENO beendet. Nach Erreichen des Endzustands ENO kann der Benutzer den Arbeitsplatzrechner nur mittels des Master-Passwortes in den aktiven Zustand versetzen.

Falls der Ablauf im dritten Zustand S3 fortgesetzt wird, so wird ein neuer Zeitabschnitt TP, beispielsweise 10 Minuten, gewählt. Während dieses Zeitabschnitts kann der Benutzer mit Hilfe der verkürzten Passwörter, also der Teilpasswörter P2 und P3, den Arbeitsplatzrechner in den aktiven Zustand versetzen. Erfolgt dies nicht, so wird nach Ablauf des Zeitabschnitts von 10 Minuten das Teilpasswort P2 aus der Liste gelöscht. Danach wird ein weiterer Zeitabschnitt definiert, beispielsweise 20 Minuten, innerhalb derer der Benutzer mit dem Teilpasswort P3 oder dem Master-Passwort den Arbeitsplatzrechner entsperren kann. Erfolgt dies nicht, so wird nach Ablauf der 20 Minuten im fünften Zustand das Teilpasswort P3 aus der Liste gelöscht und nach Prüfung durch den sechsten Zustand S6 das Ablaufdiagramm in dem Endzustand ENO beendet, da lediglich das Masterpasswort und kein Teilpasswort in der Liste vorhanden ist. Somit besteht für den Benutzer innerhalb eines Zeitraums von 5+10+20=35 Minuten die Möglichkeit, mit verkürzten Passwörtern, das heißt Teilpasswörter, den Arbeitsplatzrechner zu entsperren. Danach kann der Arbeitsplatzrechner nur mit dem Master-Passwort in den aktiven Zustand versetzt werden.

Entgegen des Beispiels ist die Erfindung nicht auf die oben genannten Werte für die Anzahl an Teilpasswörtern bzw. Master-Passwort beschränkt. Oftmals umfasst das Masterpasswort mehr als 10 Zeichen. Zudem kann eine minimale Anzahl an Zeichen für die Teilpasswörter vorgegeben werden, beispielsweise mindestens 3 Zeichen, um somit eine Basissicherheit bei der Passwortauswahl zu haben. Ferner müssen die Teilpasswörter nicht zusammenhängende Zeichenketten des Master-Passwortes sein oder können in beliebiger Art und Weise auch unabhängig vom Master-Passwort gebildet werden. Beispielsweise können bei der Abfrage des Teilpasswortes durch das Programm PRG bestimmte Positionen des Master-Passwortes abgefragt werden, z.B. die zweite und die vierte Zeichenposition.

Die Teilpasswörter können als eine zusammenhängende Zeichenkette des Masterpasswortes gebildet werden, da hierdurch der Benutzer sich nur das Masterpasswort merken muss, da die Teilpasswörter Zeichenketten des Masterpasswortes sind. Besonders vorteilhaft ist es, falls die zusammenhängende Zeichenkette mit dem Zeichen beginnt, welches dem ersten Zeichen des Masterpasswortes entspricht. Hierdurch kann der Benutzer bei der Eingabe des eingegebenen Passwortes die Zeichen analog zur Reihenfolge der Zeichen des Masterpassworts eingeben, wobei das eingegebene Passwort nach Eingabe jedes neuen Zeichens mit den in der Liste abgelegten Passwörter bzw. Teilpasswörtern verglichen wird. Somit braucht der Benutzer unabhängig von den in der Liste abgelegten Teilpasswörtern sich nur das Masterpasswort merken, wobei der aktive Zustand erreicht wird, nachdem der Benutzer zumindest eine Anzahl an Zeichen des Masterpasswortes eingegeben hat, die der kleinsten Anzahl an Zeichen eines der Teilpasswörter in der Liste entspricht. Dies ermöglicht eine komfortable Bedienung und eine schnelle Änderung des Zustands von dem inaktiven in den aktiven Zustand.

Um das Master-Passwort und/oder die Teilpasswörter sicher in der Liste ablegen zu können, können diese mit Hilfe einer Hash-Funktion [1] kodiert werden. Um die Sicherheit zu erhöhen können im Rahmen der Kodierung durch die Hash-Funktion auch für jedes Teilpasswort und Master-Passwort individuelle Zufallswerte hinzugenommen werden, die im Englischen als "Salt" bezeichnet werden. Da die Hash-Kodierung oftmals gleichlange kodierte Teilpasswörter erzeugt, kann neben der Speicherung des kodierten Teilpasswortes auch die dazugehörige Anzahl an Zeichen und ggfs. der dazugehörige Zufallswert in der Liste geordnet abgelegt werden.

Zum Erstellen von Teilpasswörtern ist dem zweiten Zustand S2 das gültige Passwort im Klartext bekannt, da es gegen die Einträge der Liste positiv geprüft wurde, ggfs. erfolgte die Prüfung nach einer Hash-Kodierung ggfs. mit Zufallswert des eingegebenen Passwortes. Hieraus kann das zumindest eine Teilpasswort erzeugt und in der Liste abgelegt werden. Da die Liste startend mit dem Teilpasswort, welches die kleinste Anzahl an Zeichen aufweist, reduziert wird, können ausgehend vom dem aktuell positiv geprüften Passwort ein oder mehrere Teilpasswörter erzeugt werden. Ein Löschen aller Teilpasswörter und ein Neuaufbau der gesamten Liste sind daher nicht notwendig.

Neben dem individuellen Setzen des Zeitabschnitts, bis zumindest ein Teilpasswort gelöscht wird, kann der Zeitabschnitt auch in Abhängigkeit von einer Entropie des in der Liste abgelegten Teilpasswortes mit der kürzesten Anzahl an Zeichen bestimmt werden. Ist das Teilpasswort "aa" so ist die Entropie kleiner als bei einem Teilpasswort "a$9". Im ersten Fall wird ein kleinerer Wert für die Zeitspanne und im zweiten Fall ein größerer Wert vorgegeben, z.B. 1 Minute gegenüber 8 Minuten. Im Allgemeinen beschreibt die Entropie ein Maß für den mittleren Informationsgehalt oder auch Informationsdichte des jeweiligen Passwortes / Teilpasswortes.

Ferner kann der Zeitabschnitt in Abhängigkeit von (i) einer Position als auch von (ii) einem Abstand des Benutzers oder des Gerätes von einem Ort definiert werden. Ist der Benutzer oder das Gerät im Nahbereich, z.B. in einem Gebäude, so können die einzelnen Werte für den Zeitabschnitt größer gewählt werden, als im Fall, dass der Benutzer oder das Gerät mehrere Kilometer voneinander entfernt sind, beispielsweise wird die Entfernung über eine Funkzellortung eines Mobilfunknetzes ermittelt. Im letzteren Fall ermöglicht die Reduktion der Werte des Zeitabschnitts, dass in kürzerer Zeit ein sehr sicheres Passwort zur Änderung des Betriebszustands benötigt wird und somit die Sicherheit erhöht werden kann. Diese Erweiterung kann beispielsweise mit einem multiplikativen Faktor realisiert werden, das heißt ist der Benutzer oder das Gerät im Nahbereich, so ist der Faktor, mit dem die Zeitspanne multipliziert wird beispielsweise 2 und im Fernbereich beispielsweise 0,25. In der ersten Variante dieser Erweiterung kann in Abhängigkeit von der Position des Geräts der Zeitabschnitt gewählt werden. Befindet sind das Gerät in einem Raum, der nur über eine Zugangskontrolle, wie beispielsweise einem Tresorraum, erreichbar ist, so können größere Zeitabschnitte gewählt werden, als im Falle, dass das Gerät auf einem öffentlichen Platz steht, beispielsweise ist das Gerät ein in einem Internetcafe stehender PC mit Internetzugang. Die Position kann über gängige Ortungssysteme, wie GPS (GPS- Global Position System) oder Mobilfunk, durchgeführt werden.

In dem obigen Ausführungsbeispiel werden die Passwörter/Teilpasswörter in einer Liste gespeichert und nach Erreichen eines Zeitabschnitts ein oder mehrere Teilpasswörter mit einer kürzesten Länge, d.h. einer geringsten Anzahl an Zeichen, aus der Liste gelöscht, um damit beim Login nur Passwörter / Teilpasswörter mit einer Anzahl an Zeichen größer als die kürzeste Länge zu erzwingen. In einer alternativen Ausführung werden zunächst alle Passwörter bzw. Teilpasswörter in der Liste LIS abgelegt. Ferner wird in der Liste eine Markierung eingefügt, die angibt, welche Passwörter bei dem nächsten Login zulässig und / oder unzulässig sind. Nach Erreichen des Zeitabschnitts wird in der alternativen Ausführung kein Passwort / Teilpasswort gelöscht, sondern die Markierung in der Liste derart aktualisiert, dass die Markierung nur eine oder mehrere Teilpasswörter, die bislang beim Login akzeptiert wurden ab sofort nicht mehr akzeptiert. Das folgende Beispiel zeigt diese Vorgehensweise. Liste enthält folgende Einträge, wobei das Passwort P4 das Masterpasswort ist, von denen die anderen Passwörter abgeleitet sind:

| Nummer des Listeneintrags | Teilpasswort | Inhalt | Anzahl an Zeichen |
|---|---|---|---|
| 1 | P1 | a | 1 |
| 2 | P2 | a! | 2 |
| 3 | P3 | a!8 | 3 |
| 4 | P4 | a!8# | 4 |

Zunächst zeigt die Markierung auf den Listeneintrag 1, wodurch die Passwörter P1 bis P4 zulässige Passwörter zum Durchführen der Zustandsänderung sind. Nach Ablauf des Zeitabschnitts wird die Markierung auf 2 gesetzt. Ab diesem Zeitpunkt sind nur noch die Passwörter P2 bis P4 zulässig. Nach Ablauf eines weiteren Zeitabschnitts wird die Markierung auf 3 gesetzt, wodurch nur noch die Passwörter P3 und P4 als zulässige Passwörter beim Login akzeptiert werden. Schließlich wird nach Ablauf eines weiteren Zeitabschnitts die Markierung auf P4 gesetzt, wodurch nur noch das Masterpasswort, also das Passwort mit den meisten Zeichen, zulässig ist, um die Zustandsänderung zu bewirken. Nachdem einige Zeit später ein Zustandswechsel von dem zweiten Zustand in den ersten Zustand stattgefunden hat wird die Markierung wieder auf den Wert 1 gesetzt und der erste Zeitabschnitt gestartet, der nach Ablauf die Markierung in den nächsten Wert versetzt. Alternativ kann die Markierung auch nach Erreichen der Zustandsänderung des Geräts in den zweiten Zustand auf denjenigen Wert gesetzt werden, der das Teilpasswort mit der kleinsten Länge aufweist. Der erste Zeitabschnitt kann im Allgemeinen bereits nach Erreichen des zweiten Betriebszustands oder nach Erreichen des ersten Betriebszustands gestartet werden, bspw. mit Hilfe eines Timers.

Die Erfindung wurde in dem Ausführungsbeispiel anhand einer Passwortabfrage zur Zustandsänderung des Arbeitsplatzrechners durch den Benutzer exemplarisch dargestellt. Im Allgemeinen kann der Benutzer des Geräts ein weiteres Gerät in einer Fertigungsanlage sein, wobei das weitere Gerät zum Austausch von Daten, z.B. Steuerbefehlen oder Messwerten, sich zunächst mittels des Passwortes bei dem Gerät authentifizieren muss, und erst nach erfolgreichem Authentifizieren die Daten übermittelt werden können. Durch das Authentifizieren wird das Gerät von dem ersten Betriebszustand in den zweiten Betriebszustand versetzt. Hierbei kann durch Verwendung von verkürzten Passwörtern, d.h. Teilpasswörtern, die Authentifizierung beschleunigt werden, da die Komplexität zur Durchführung der Authentifizierung auf der Geräteseite, beispielsweise durch das Programm PRG und die Liste LIS erheblich vereinfacht wird.

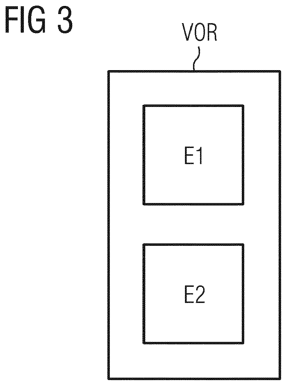

Die Erfindung kann mittels einer Vorrichtung VOR, siehe Figur 3, realisiert werden, die zur Bereitstellung zumindest eines Passworts P1, P2, P3, P4 für eine Zustandsänderung eines Geräts COM von einem ersten Betriebszustand in einen zweiten Betriebszustand mittels einer Eingabe des Passworts P1, P2, P3, P4 ausgebildet ist, wobei durch eine erste Einheit E1 zum Einstellen einer Anzahl an Zeichen des Passworts P1, P2, P3, P4 in Abhängigkeit von einer Zeitdauer ZD des ersten Betriebszustands des Geräts COM. Die Vorrichtung kann ferner eine zweite Einheit E2 aufweisen, die derart ausgestaltet ist, dass zumindest einer der Erweiterungen des Verfahrens implementier- und ausführbar ist. Die erste und zweite Einheit können in Software, Hardware oder in einer Kombination aus Soft- und Hardware implementiert und ausgebildet sein. Hierzu können die einzelnen Schritte des Verfahrens in einem maschinenlesbaren Code auf einer Speichereinheit abgelegt sein, wobei der Code durch eine mit der Speichereinheit verbundene Prozessoreinheit lesbar ist. Die Prozessoreinheit kann mit der ersten und zweiten Einheit sowie mit weiteren Einheiten mittels eines Busses BUS zum Austausch von Daten, wie Kommunikationsnachrichten zum Austausch mit dem weiteren Gerät, oder zur Aufnahme der Passworteingabe ausgestaltet sein.

### Literatur

[1] "hash-function", siehe http://en.wikipedia.org/ wiki/Hash_function

## Patentansprüche

1. Verfahren zur Bereitstellung zumindest eines Passworts (P1, P2, P3, P4) für eine Zustandsänderung eines Geräts (COM) von einem ersten Betriebszustand in einen zweiten Betriebszustand durch eine Eingabe des Passworts (P1, P2, P3, P4), wobei eine Anzahl an Zeichen des Passworts (P1, P2, P3, P4) in Abhängigkeit von einer Zeitdauer (ZD) des ersten Betriebszustands des Geräts (COM) eingestellt wird, wobei
a) nach einer erfolgreichen Eingabe des Passworts (P4) mit einer ersten Anzahl (A1) an Zeichen eine Liste (LIS) mit zumindest einem Teilpasswort (P1, P2, P3) erstellt wird, wobei das zumindest eine Teilpasswort (P1, P2, P3) eine Teilmenge an Zeichen des Passworts (P4) aufweist und eine Anzahl an Zeichen des zumindest einen Teilpasswortes (P1, P2, P3) kleiner oder gleich als die erste Anzahl (A1) ist,
b) durch die Liste eine Menge an Passwörtern für die Zustandsänderung des Geräts von dem ersten Betriebszustand in den zweiten Betriebszustand bereitstellt wird,
wobei nach Ablauf eines Zeitabschnitts (TP) der Zeitdauer (ZD), wobei der Zeitabschnitt (TP) einen Zeitraum nach Durchführung einer Änderung der Liste (LIS) repräsentiert, ein oder mehrere Teilpasswörter (P1) aus der Liste (LIS) entfernt werden, dadurch charakterisiert, dass ein Wert des Zeitabschnitts (TP) zumindest auf Basis einer Entropie desjenigen Teilpassworts der Liste erzeugt wird, welches die kleinste Anzahl an Zeichen aufweist.

2. Verfahren nach Anspruch 1,
**dadurch gekennzeichnet, dass** die Anzahl an Zeichen mit einer Zunahme der Zeitdauer (ZD) größer eingestellt wird.

3. Verfahren nach Anspruch 1 oder 2,
**dadurch gekennzeichnet, dass** nach Entfernen zumindest eines Teilpasswortes der Zeitabschnitt (TP) bis zum nächsten Ändern der Liste (LIS) erhöht oder reduziert wird.

4. Verfahren nach einem der Ansprüche 1 bis 3,
**dadurch gekennzeichnet, dass** ein Wert des Zeitabschnitts (TP) auf Basis einer Entfernung oder Ortsangabe, insbesondere einer geographischen Position des Geräts (COM), eingestellt wird.

5. Verfahren nach einem der Ansprüche 1 bis 4,
**dadurch gekennzeichnet, dass** das Entfernen von einem oder mehreren Teilpasswörtern (P1) aus der Liste (LIS) gemäß Anspruchs 1 unterbunden wird, sobald lediglich ein einziges Passwort (P4) in der Liste (LIS) enthalten ist.

6. Verfahren nach einem der Ansprüche 1 bis 5,
**dadurch gekennzeichnet, dass** die Liste (LIS) mit mehreren Teilpasswörtern (P1, P2, P3) derart erstellt wird, dass eines der Teilpasswörter (P1) mit einer kleinen Anzahl an Zeichen vollständig in einem anderen der Teilpasswörter (P2, P3) mit einer zu der kleinen Anzahl größeren Anzahl an Zeichen enthalten ist.

7. Verfahren nach einem der Ansprüche 1 bis 6,
**dadurch gekennzeichnet, dass** das zumindest eine Teilpasswort (P1, P2, P3) mit Hilfe eines Hash-Kodierverfahrens kodiert in der Liste (LIS) organisiert gespeichert wird.

8. Verfahren nach Anspruch 7,
**dadurch gekennzeichnet, dass** bei der Kodierung des Teilpassworts (P1, P2, P3) ferner ein Zufallswert berücksichtigt und der Zufallswert zusätzlich in der Liste organisiert gespeichert wird.

9. Vorrichtung (VOR) zur Bereitstellung zumindest eines Passworts (P1, P2, P3, P4) für eine Zustandsänderung eines Geräts (COM) von einem ersten Betriebszustand in einen zweiten Betriebszustand mittels einer Eingabe des Passworts (P1, P2, P3, P4),
wobei eine erste Einheit (E1) zum Einstellen einer Anzahl an Zeichen des Passworts (P1, P2, P3, P4) in Abhängigkeit von einer Zeitdauer (ZD) des ersten Betriebszustands des Geräts (COM) vorgesehen ist, undwobei eine zweite Einheit (E2) vorgesehen, die derart ausgestaltet ist, dass zumindest einer der Verfahrensschritte gemäß einem der Ansprüche 1 bis 8 implementier- und ausführbar ist.

## Claims

1. Method for the provision of at least one password (P1, P2, P3, P4) for changing the state of a device (COM) from a first operational state into a second operational state by means of inputting the password (P1, P2, P3, P4), wherein a number of characters of the password (P1, P2, P3, P4) are set in accordance with the time duration (ZD) of the first operational state of the device (COM), wherein
a) after successfully inputting the password (P4) with a first number (A1) of characters, a list (LIS) with at least one partial password (P1, P2, P3) is created, wherein the at least one partial password (P1, P2, P3) has a subset of characters of the password (P4) and a number of characters of the at least one partial password (P1, P2, P3) is less than or equal to the first number (A1),
b) due to the list, a lot of passwords for changing the state of the device from the first operational state to the second operational state are provided,
wherein, after a time period (TP) of the time duration (ZD) has passed, whereby the time period (TP) represents a span of time after carrying out a modification to the list (LIS), one or a plurality of partial passwords (P1) are deleted from the list (LIS), **characterized in that** a value of the time period (TP) is generated at least based on an entropy of the same partial password of the list that has the smallest number of characters.

2. Method according to Claim 1, **characterized in that** the number of characters is set to be larger as the time duration increases (ZD).

3. Method according to Claim 1 or 2, **characterized in that**, after deleting at least one partial password, the time period (TP) is increased or decreased up until the next modification of the list (LIS).

4. Method according to one of Claims 1 to 3, **characterized in that** a value for the time period (TP) is set based on a distance or specifying a position, more preferably, a geographical position of the device (COM).

5. Method according to one of Claims 1 to 4, **characterized in that** the deletion of one or a plurality of partial passwords (P1) from the list (LIS) in accordance with Claim 1 is prevented once the list (LIS) contains only a single password (P4) .

6. Method according to one of Claims 1 to 5, **characterized in that** the list (LIS) with a plurality of partial passwords (P1, P2, P3) is created so that one of the partial passwords (P1) with a small number of characters is completely contained in another one of the partial passwords (P2, P3) with a number of characters larger than the small number of characters.

7. Method according to one of Claims 1 to 6, **characterized in that** the at least one partial password (P1, P2, P3) is saved in the list (LIS) with the help of a hash-coding method in sequence and in a coded manner.

8. Method according to Claim 7, **characterized in that**, when coding the partial password (P1, P2, P3), a random value is furthermore taken into account and the random value is additionally saved in the list in sequence.

9. Device (VOR) for the provision of at least one password (P1, P2, P3, P4) for changing the state of a device (COM) from a first operational state into a second operational state by means of inputting the password (P1, P2, P3, P4), wherein a first unit (E1) to set a number of characters of the password (P1, P2, P3, P4) depending on a time duration (ZD) of the first operational state of the device (COM) is provided, and wherein a second unit (E2) provided that is designed in such a way that at least one of Method steps in accordance with one of Claims 1 to 8 can be implemented and executed.

## Revendications

1. Procédé pour fournir au moins un mot de passe (P1, P2, P3, P4) permettant de changer l'état d'un appareil (COM) pour le faire passer d'un premier état de fonctionnement dans un second état de fonctionnement par entrée du mot de passe (P1, P2, P3, P4), dans lequel le nombre de caractères du mot de passe (P1, P2, P3, P4) est fixé en fonction d'une première durée (ZD) du premier état de fonctionnement de l'appareil (COM), dans lequel :
a) après une entrée réussie du mot de passe (P4) comportant un premier nombre (A1) de caractères, une liste (LIS) comportant au moins un mot de passe partiel (P1, P2, P3) est créée, le au moins un mot de passe partiel (P1, P2, P3) comportant une quantité partielle des caractères du mot de passe (P4) et le nombre de caractères du au moins un mot de passe partiel (P1, P2, P3) étant inférieur ou égal au premier nombre (A1),
b) une quantité de mots de passe permettant de changer l'état de fonctionnement de l'appareil d'un premier état de fonctionnement dans un second état de fonctionnement est fournie par la liste, et
dans lequel, après expiration d'un intervalle de temps (TP) de la durée (ZD), l'intervalle de temps (TP) représentant une période après l'exécution d'une modification de la liste (LIS), un ou plusieurs mots de passe partiels (P1) sont enlevés de la liste (LIS), **caractérisé en ce que** la valeur de l'intervalle de temps (TP) est générée au moins sur la base d'une entropie du mot de passe partiel de la liste qui comporte le plus petit nombre de caractères.

2. Procédé selon la revendication 1, **caractérisé en ce que** le nombre de caractères est fixé de façon à être plus grand à mesure d'une augmentation de la durée (ZD).

3. Procédé selon la revendication 1 ou 2, **caractérisé en ce qu'**après l'enlèvement d'au moins un mot de passe partiel, l'intervalle de temps (TP) jusqu'à une prochaine modification de la liste (LIS) est augmenté ou réduit.

4. Procédé selon l'une des revendications 1 à 3, **caractérisé en ce que** la valeur de l'intervalle de temps (TP) est fixée sur la base d'un éloignement ou d'une indication de lieu, notamment d'une position géographique de l'appareil (COM).

5. Procédé selon l'une des revendications 1 à 4, **caractérisé en ce que** l'enlèvement d'un ou de plusieurs mots de passe partiels (P1) de la liste (LIS) selon la revendication 1 est interrompu dès qu'un mot de passe individuel (P4) est contenu dans la liste (LIS).

6. Procédé selon l'une des revendications 1 à 5, **caractérisé en ce que** la liste (LIS) comportant plusieurs mots de passe partiels (P1, P2, P3) est créée de manière à ce qu'un des mots de passe partiels (P1) possédant un petit nombre de caractères soit entièrement contenu dans un autre des mots de passe partiels (P2, P3) ayant un nombre de caractères plus grand que le petit nombre.

7. Procédé selon l'une des revendications 1 à 6, **caractérisé en ce que** le au moins un mot de passe partiel (P1, P2, P3) est codé au moyen d'un procédé de codage Hash et enregistré de façon organisée dans la liste (LIS).

8. Procédé selon la revendication 7, **caractérisé en ce que**, lors du codage du mot de passe partiel (P1, P2, P3), une valeur aléatoire est prise en compte en outre et la valeur aléatoire est enregistrée de façon organisée en plus dans la liste.

9. Dispositif (VOR) pour fournir au moins un mot de passe (P1, P2, P3, P4) permettant de changer l'état d'un appareil (COM) pour le faire passer d'un premier état de fonctionnement dans un second état de fonctionnement par entrée du mot de passe (P1, P2, P3, P4),
dans lequel une première unité (E1) destinée à fixer le nombre de caractères du mot de passe (P1, P2, P3, P4) en fonction d'une durée (ZD) du premier état de fonctionnement de l'appareil (COM) est prévue et dans lequel une seconde unité (E2) configurée de manière à ce qu'au moins une des étapes du procédé selon l'une des revendications 1 à 8 puisse être implémentée et exécutée est prévue.
